# FASCICULE DE BREVET EUROPEEN

(11) **EP 1 547 497 B1**
(45) Date de publication et mention de la délivrance du brevet: **30.05.2007**
(21) Numéro de dépôt: 04356205.7
(22) Date de dépôt: 22.12.2004
(51) Int. Cl.: A47J 27/09

(54) **Appareil domestique de cuisson d'aliments sous pression à dispositif de verrouillage amélioré**
Haushaltsdampfdruckkochgerät mit verbesserter Verriegelungsvorrichtung
Domestic pressure cooking appliance with improved locking device

(30) Priorité: 23.12.2003 FR 0315241
(43) Date de publication de la demande: 29.06.2005
(73) Titulaire: SEB S.A., 69132 Ecully Cedex (FR)
(72) Inventeur: Anota, Daniel Jean-Marie, 21000 Dijon (FR); Rhetat, Eric Jacques, 21000 Dijon (FR)
(74) Mandataire: Martin, Didier Roland Valéry

(56) Documents cités:
- WO-A-96/01070
- WO-A-03/064897
- BE-A- 806 483

## Description

La présente invention se rapporte au domaine technique général des appareils domestiques de cuisson d'aliments sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression comportant une cuve et un couvercle, ainsi qu'un dispositif de verrouillage / déverrouillage du couvercle sur la cuve, ledit dispositif comprenant :
- au moins une mâchoire, montée mobile radialement sur le couvercle par l'intermédiaire d'un bras entraîneur entre une position de verrouillage du couvercle sur la cuve et une position de déverrouillage dans laquelle le couvercle peut être retiré de la cuve,
- des moyens de commande du mouvement de ladite au moins une mâchoire, reliés au bras de façon à provoquer son déplacement radial et à déplacer la mâchoire dans l'une ou l'autre des positions de verrouillage et de déverrouillage, lesdits moyens de commande comprenant :
   - un organe de manipulation, apte à être déplacé pour commander le déplacement de la mâchoire,
   - une pièce de commande, montée mobile en translation sur le couvercle et entraînée en déplacement par l'organe de commande, ladite pièce de commande coopérant avec le bras entraîneur de telle manière que la translation de la pièce de commande provoque un déplacement radial du bras entraîneur,
   - au moins une soupape de verrouillage, montée sur le couvercle et apte à occuper sous l'effet de la pression régnant dans l'appareil, une position haute d'étanchéité et une position basse de fuite.

On connaît déjà, d'après la demande de brevet WO-96/01070, un appareil domestique de cuisson d'aliments sous pression comportant une cuve et un couvercle, et mettant en oeuvre un dispositif de verrouillage / déverrouillage comportant des mâchoires montées mobiles radialement sur le couvercle par l'intermédiaire de bras entraîneurs.

Les mâchoires, au nombre de deux, sont diamétralement opposées par rapport à l'axe central de l'appareil, mobiles radialement, et aptes à venir enserrer, dans leur position de verrouillage, le bord périphérique tombé de la cuve pour fermer hermétiquement le récipient.

La commande du déplacement des mâchoires est notamment assurée par un bouton poussoir monté mobile radialement sur le couvercle et solidarisé avec une pièce de commande présentant une zone triangulaire qui, lorsque le bouton est enfoncé, vient progressivement engager, par ses flancs, des ergots solidarisés avec les bras entraîneurs.

Dans ce dispositif, les bras entraîneurs se chevauchent partiellement et sont chacun pourvu d'une lumière de verrouillage, la position et la dimension de chaque lumière de verrouillage devant être déterminées en fonction de la longueur de chaque bras entraîneur, pour que les lumières soient en position d'alignement relatif lorsque les mâchoires sont en position de verrouillage, de manière à permettre alors à une soupape de verrouillage d'occuper une position haute d'étanchéité au sein de chacune desdites lumières de verrouillage.

Cette conception fait en outre intervenir une pièce support supplémentaire, qui enserre les bras entraîneurs, et les guide en déplacement.

La pièce support permet également de soutenir la soupape de verrouillage et comporte à cet effet une ouverture, disposée et agencée de telle sorte que lorsque les mâchoires sont verrouillées, ladite ouverture soit alignée d'une part avec les lumières de verrouillage ménagées dans les bras entraîneurs, et d'autre part un perçage ménagé dans le couvercle, au sein duquel est montée la soupape de verrouillage.

De tels appareils, s'ils apportent une contribution positive à l'amélioration des systèmes de verrouillage en position de fermeture, présentent néanmoins plusieurs inconvénients non négligeables.

Ainsi, la conception de ces appareils implique la mise en oeuvre d'une série de pièces mobiles relativement les unes par rapport aux autres et est susceptible de conduire à des risques de grippage non négligeables.

En outre, de tels appareils relèvent d'une cinématique assez complexe susceptible de permettre la mise en regard simultanée des lumières de verrouillage ménagées sur chacun des bras relativement l'une par rapport à l'autre, et également avec le perçage ménagé dans le couvercle et l'ouverture ménagée dans la pièce support.

Or, il existe un besoin croissant de réaliser des mécanismes de commande simples et compacts.

Les objets assignés à l'invention visent en conséquence à porter remède aux différents inconvénients énumérés précédemment et à proposer un nouvel appareil domestique de cuisson d'aliments sous pression qui, tout en présentant une conception compacte et simple, permet de s'assurer, de manière facile et fiable, de la bonne position des mâchoires et de la fermeture complète et sûre du couvercle sur la cuve.

Un autre objet de l'invention vise à proposer un nouvel appareil domestique de cuisson d'aliments sous pression permettant un déplacement des mâchoires particulièrement facile, tout en étant robuste et simple.

Un autre objet de l'invention vise à proposer un nouvel appareil domestique de cuisson d'aliments sous pression dont la rigidité globale et le montage sont améliorés.

Un autre objet de l'invention vise à proposer un nouvel appareil domestique de cuisson d'aliments sous pression offrant une bonne résistance à l'ouverture, lorsqu'il est sous pression.

Un autre objet de l'invention vise à proposer un nouvel appareil domestique de cuisson d'aliments sous pression qui présente de bonnes garanties de sécurité d'utilisation, notamment vis-à-vis des risques liés à la pression, et ce tant pendant les étapes de fermeture que pendant les étapes d'ouverture de l'appareil.

Les objets assignés à l'invention sont atteints à l'aide d'un appareil domestique de cuisson d'aliments sous pression comportant une cuve et un couvercle, ainsi qu'un dispositif de verrouillage / déverrouillage du couvercle sur la cuve, ledit dispositif comprenant :
- au moins une mâchoire, montée mobile radialement sur le couvercle par l'intermédiaire d'un bras entraîneur entre une position de verrouillage du couvercle sur la cuve et une position de déverrouillage dans laquelle le couvercle peut être retiré de la cuve,
- des moyens de commande du mouvement de ladite au moins une mâchoire, reliés au bras entraîneur de façon à provoquer son déplacement radial et à déplacer la mâchoire dans l'une ou l'autre des positions de verrouillage et de déverrouillage, lesdits moyens de commande comprenant :
   - un organe de manipulation, apte à être déplacé pour commander le déplacement de la mâchoire,
   - une pièce de commande, montée mobile en translation sur le couvercle et entraînée en déplacement par l'organe de manipulation, ladite pièce de commande coopérant avec le bras entraîneur de telle manière que la translation de la pièce de commande provoque un déplacement radial du bras entraîneur,
   - au moins une soupape de verrouillage, montée sur le couvercle et apte à occuper sous l'effet de la pression régnant dans l'appareil, une position haute d'étanchéité et une position basse de fuite,
caractérisé en ce que la pièce de commande est pourvue d'une lumière disposée relativement à la soupape de verrouillage pour qu'en position de verrouillage de la mâchoire, la soupape soit libre d'occuper sa position haute au sein de la lumière et verrouille ainsi en position la pièce de commande.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue écorchée en perspective, un appareil domestique de cuisson d'aliments sous pression conforme à l'invention dans la position déverrouillée.
- La figure 2 illustre, selon une vue en perspective, un détail du dispositif de verrouillage / déverrouillage conforme à l'invention dans la position déverrouillée.
- La figure 3 illustre, selon une vue en perspective, un détail du dispositif de verrouillage / déverrouillage conforme à l'invention dans une position intermédiaire entre la position verrouillée et déverrouillée.
- La figure 4 illustre, selon une vue en perspective, un détail du dispositif de verrouillage / déverrouillage conforme à l'invention dans une position verrouillée du couvercle sur la cuve, l'appareil étant sous pression.
- La figure 5 illustre, selon une vue en coupe, l'assemblage entre la soupape de verrouillage, la pièce de commande et le couvercle lorsque la soupape de verrouillage est dans sa position basse de fuite, et que le couvercle est verrouillé sur la cuve, l'appareil n'étant pas sous pression.
- La figure 6 illustre, selon une vue en coupe, l'assemblage formé par la soupape de verrouillage, la pièce de commande et le couvercle lorsque la soupape de verrouillage est en position haute d'étanchéité, et que le couvercle est verrouillé sur la cuve, l'appareil étant sous pression.
- La figure 7 illustre, selon une vue en coupe, l'assemblage formé par la soupape de verrouillage, la pièce de commande et le couvercle lorsque le couvercle est dans une position intermédiaire entre la position verrouillée et la position déverrouillée, et qu'une pression relative non nulle règne dans l'appareil.

L'appareil de cuisson conforme à l'invention est destiné à assurer la cuisson d'aliments sous pression dans un contexte domestique.

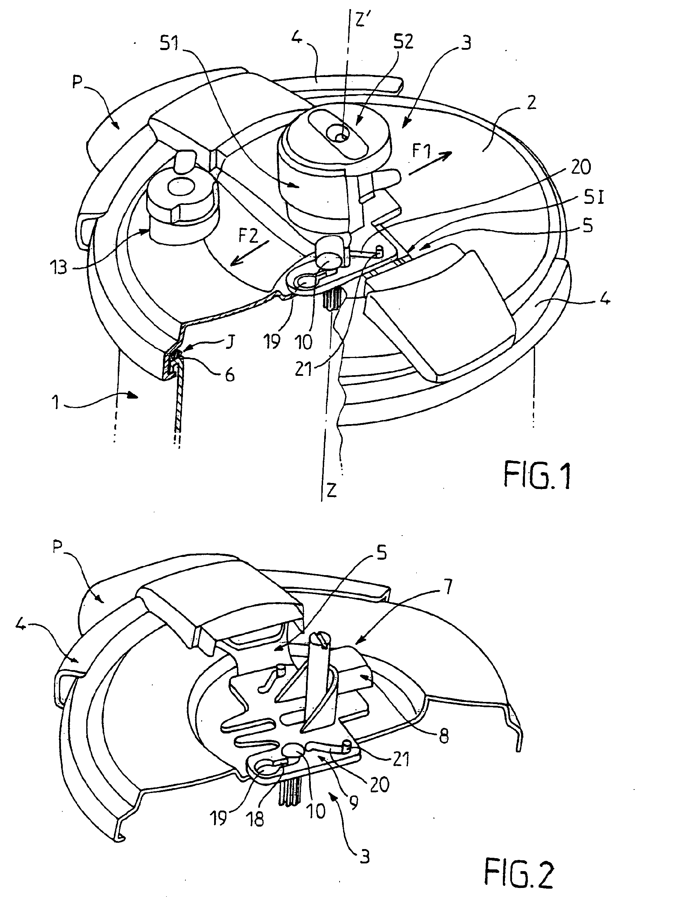

L'appareil va être décrit en s'appuyant sur les figures 1 à 7.

L'appareil de cuisson conforme à l'invention comprend une cuve 1 de forme préférentiellement cylindrique d'axe de symétrie Z-Z', ainsi qu'un couvercle 2 destiné à être rapporté de manière sensiblement étanche sur la cuve 1 par l'intermédiaire d'un joint d'étanchéité 3, et par exemple un joint à lèvres J.

Dans la suite de la description, le terme « *axial »* fera référence à la direction de l'axe de symétrie Z-Z', sensiblement vertical lorsque l'autocuiseur est dans sa position de fonctionnement normal.

La cuve est réalisée de manière classique à partir d'un matériau métallique tel que l'acier inoxydable, et pourvue d'un fond (non représenté) solidaire de la cuve 1, par exemple par frappe à chaud.

La cuve 1 comporte avantageusement des organes de préhension, tels que des poignées P préférentiellement fixées sur les parois de la cuve 1.

Le couvercle 2 présente préférentiellement un pourtour circulaire et est verrouillé sur la cuve 1 grâce à un dispositif de verrouillage / déverrouillage 3.

Le dispositif de verrouillage / déverrouillage 3 comporte, selon l'invention, deux mâchoires 4 de préférence diamétralement opposés et montées mobiles radialement sur le couvercle 2 par l'intermédiaire d'un bras entraîneur 5, entre une position de verrouillage du couvercle 2 sur la cuve 1, dans laquelle le couvercle est solidarisé à la cuve, et une position de déverrouillage, dans laquelle le couvercle peut être séparé de la cuve.

Bien évidemment, il est également envisageable de réaliser un dispositif de verrouillage / déverrouillage ne comportant qu'une seule mâchoire 4 montée mobile radialement sur le couvercle 2.

Selon cette variante de réalisation (non représentée aux figures), le dispositif de verrouillage / déverrouillage comportera avantageusement un oreillon solidarisé avec la cuve, et monté de façon diamétralement opposé à la mâchoire, le couvercle étant susceptible d'être monté sur la cuve en le faisant glisser sensiblement horizontalement dans le logement de l'oreillon jusqu'à ce qu'il vienne à la verticale de la cuve. Une fois dans cette position, le couvercle pourra alors être verrouillé en actionnant la mâchoire.

La mâchoire 4 se présente avantageusement sous la forme d'une plaque métallique profilée en U de manière à enserrer le bord périphérique 6 tombé de la cuve 1, tel que cela est bien connu de l'homme du métier.

Le dispositif de verrouillage /déverrouillage 3 conforme à l'invention comprend également des moyens de commande 7 du mouvement des mâchoires 4 reliés aux bras entraîneurs 5, de façon à provoquer leur déplacement radial et à déplacer les mâchoires 4 dans l'une ou l'autre des positions de verrouillage et de déverrouillage.

Les moyens de commande 7 comportent avantageusement un organe de manipulation 8, par exemple un bouton poussoir, apte à être déplacé, notamment par enfoncement, pour commander le déplacement des mâchoires 4. Les moyens de commande 7 comportent également une pièce de commande 9, se présentant avantageusement sous la forme d'une plaque aplatie, laquelle est susceptible d'être entraînée en déplacement lorsque l'utilisateur actionne l'organe de manipulation 8 par exemple en appuyant ou en tirant sur ce dernier.

La pièce de commande 9 est, selon l'invention, montée mobile en translation sur le couvercle 2 et coopère directement avec les bras entraîneurs 5, de telle manière que la translation de la pièce de commande 9 provoque un déplacement radial rectiligne des bras entraîneurs 5 suivant une direction de préférence sensiblement perpendiculaire au déplacement de la pièce de commande 9. Les bras entraîneurs 5 sont avantageusement guidés en déplacement radial strictement rectiligne.

De façon préférentielle, l'organe de manipulation 8, formé par le bouton-poussoir, est solidarisé avec la pièce de commande 9. Ainsi, lorsque l'utilisateur presse le bouton poussoir, il entraîne de manière directe la translation de la pièce de commande 9 et donc le déplacement des mâchoires 4, les bras entraîneurs 5 étant alors repoussés par la pièce de commande 9 vers la périphérie de l'appareil.

Ainsi, suivant le sens de déplacement de la pièce de commande 9, cette dernière tire les bras entraîneurs 5 vers le centre de l'appareil ou les repousse vers la périphérie, entraînant ainsi le verrouillage / déverrouillage des mâchoires 4.

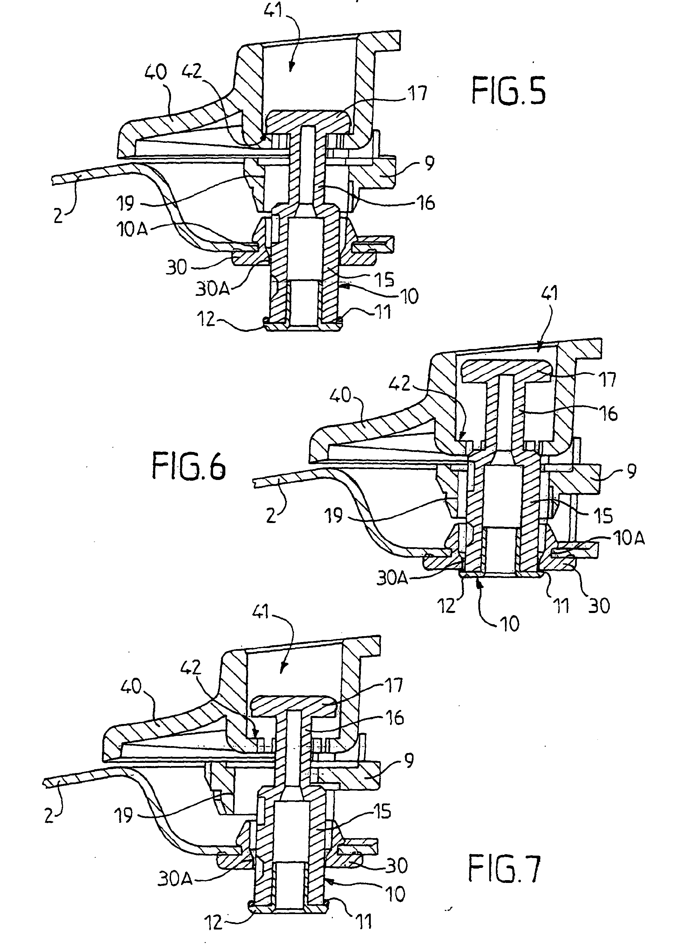

Selon l'invention, le couvercle 2 est pourvu d'au moins un perçage 10A permettant avantageusement le montage par clipage d'un insert 30, de préférence en élastomère, pourvu d'un passage 30A au sein duquel une soupape de verrouillage 10 est montée à coulissement libre axial, entre une position basse de fuite (telle qu'illustrée à la figure 5), et une position haute d'étanchéité (telle qu'illustrée à la figure 6) lorsqu'une pression suffisante règne dans l'appareil. La soupape de verrouillage 10 peut être constituée, tel que cela est bien connu de l'homme du métier, par un doigt de sécurité dont l'une des fonctions est de fournir une information visuelle de la pression régnant dans l'appareil.

Dans sa position haute, la soupape de verrouillage 10 assure une fonction d'étanchéité à la vapeur grâce à un joint 11, disposé sur une collerette 12, de préférence en matériau élastomère, formant la partie radiale externe inférieure de la soupape de verrouillage 10 (figure 6).

Ainsi, lorsque la soupape de verrouillage 10 est dans sa position haute, le joint d'étanchéité 11 est écrasé entre la paroi inférieure de l'insert 30 et la collerette 12.

Tel que cela est bien connu de l'homme du métier, l'appareil domestique de cuisson selon l'invention peut également comporter une soupape de régulation 13 conçue pour maintenir la pression dans l'enceinte à une valeur sensiblement constante prédéterminée dite « *pression de fonctionnement* ».

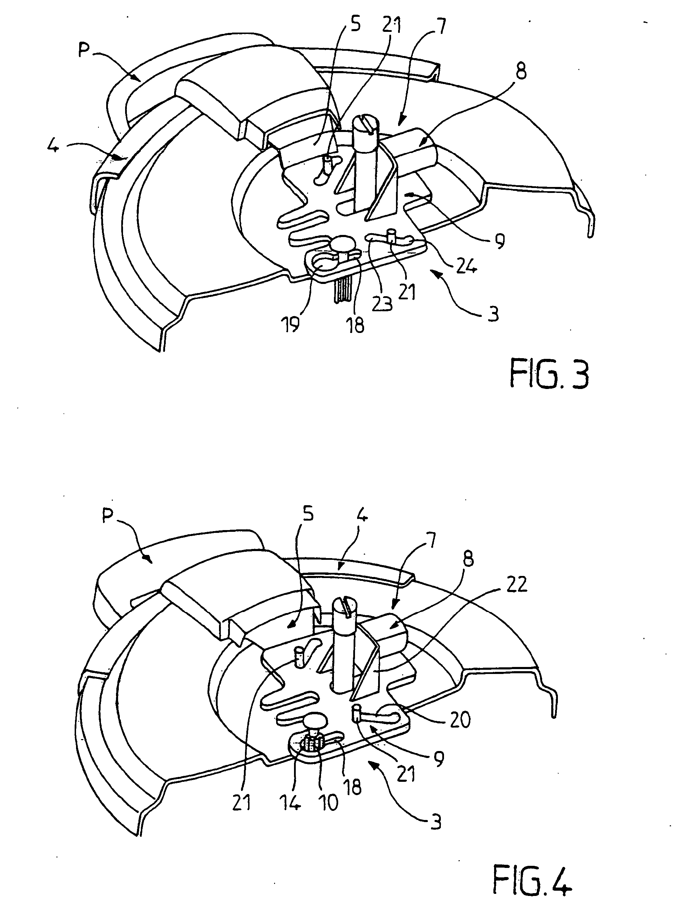

Selon l'invention telle que définie dans la revendication 1, la pièce de commande 9 est pourvue d'une lumière 14 disposée relativement à la soupape de verrouillage 10 pour qu'en position de verrouillage des mâchoires 4, la soupape de verrouillage 10 soit libre d'occuper sa position haute au sein de la lumière 14, venant ainsi verrouiller en position la pièce de commande 9 (figure 4).

L'appareil selon l'invention présente ainsi une conception particulièrement compacte et simple et permet de s'assurer, de manière simple et fiable, de la bonne position des mâchoires 4 et de la fermeture complète et sûre du couvercle 2 sur la cuve 1.

En effet, tant que la pression à l'intérieur de l'enceinte excède une valeur prédéterminée, par exemple de l'ordre de 0,5 KPa, la soupape de verrouillage 10 reste en position haute et immobilise la pièce de commande 9, maintenant ainsi les bras entraîneurs 5 et les mâchoires 4 associées dans leur position de verrouillage.

L'appareil selon l'invention permet ainsi, à l'aide de la seule pièce de commande 9, d'assurer non seulement la commande en déplacement des mâchoires 4, mais également d'empêcher l'ouverture du couvercle 2 si toutes les conditions de sécurité ne sont pas réunies.

Avantageusement, la lumière 14 et la soupape de verrouillage 10 sont conformées relativement l'une à l'autre de manière à interdire le passage en position haute de la soupape 10 lorsque la mâchoire 4 est soit déverrouillée (tel que cela est représenté sur les figures 1 et 2), soit dans une position intermédiaire entre la position verrouillée et la position déverrouillée (tel que cela est représenté sur la figure 3), empêchant ainsi la montée en pression de l'appareil si ce dernier n'est pas verrouillé.

A cet effet, la soupape de verrouillage 10 comprend avantageusement un corps principal 15, un col 16 et une tête 17, les dimensions de la section transversale du col 16 étant plus réduites que celles du corps principal 15 et de la tête 17.

De façon particulièrement avantageuse, la lumière 14 comporte un chemin de guidage 18, tel que représenté sur les figures 2 à 4. Le chemin de guidage 18 présente avantageusement une largeur sensiblement supérieure à celle du col 16, de manière à pouvoir coulisser autour dudit col 16 lorsque la soupape de verrouillage 10 est en position basse, et ainsi autoriser le déplacement de la pièce de commande 9 entre les positions de verrouillage et de déverrouillage (figures 2 et 3).

Le chemin de guidage 18 présente, en revanche, de préférence une largeur sensiblement inférieure à celle du corps principal 15 de manière à interdire le passage en position haute de la soupape 10 dès que la mâchoire 4 est dans la position déverrouillée, ou dans une position intermédiaire entre la position déverrouillée et la position verrouillée (figures 2 et 3).

La pièce de commande 9 forme alors avantageusement une butée à l'encontre du corps principal 15 de la soupape 10 (figure 7). Ainsi, la soupape 10, ne pouvant pas venir en position haute, autorise une fuite de vapeur qui empêche la pression relative à l'intérieur de l'appareil de dépasser une valeur prédéterminée, par exemple de l'ordre de 4 KPa.

De façon particulièrement avantageuse, le chemin de guidage 18 s'étend préférentiellement suivant la direction de déplacement de la pièce de commande 9, à savoir une direction parallèle aux flèches F1 et F2 (figure 1), c'est-à-dire sensiblement perpendiculaire à la direction de déplacement des bras entraîneurs 5, de manière à permettre la translation de ladite pièce de commande 9.

L'appareil comporte avantageusement un capot 40, pourvu d'un logement 41 partiellement fermé, à son extrémité inférieure, par un épaulement 42 destiné à former une butée à l'encontre de la tête 17 (figures 5 à 7).

La soupape de verrouillage 10 est ainsi avantageusement montée en suspension sur le capot 40, de telle sorte que dans sa position basse de fuite, elle vienne en appui, par le biais de la tête 17, sur l'épaulement 42 (figure 5).

De façon particulièrement avantageuse, la lumière 14 présente un élargissement local 19 (figures 1 à 3 et 5 à 7), disposé de telle sorte qu'en position de verrouillage, la soupape de verrouillage 10 puisse venir occuper sa position haute au sein dudit élargissement local 19, verrouillant ainsi la pièce de commande 9 en position, tel que cela est représenté sur la figure 6.

Ainsi, dès que la pression relative à l'intérieur de l'enceinte de l'appareil (en position verrouillée) dépasse une valeur prédéterminée, par exemple de l'ordre de 1,5 KPa, la soupape de verrouillage 10 vient occuper l'espace libre de l'élargissement local 19 et forme une butée à l'encontre de la pièce de commande 9, empêchant ainsi cette dernière de se déplacer. L'utilisateur n'est alors plus en mesure d'ouvrir l'appareil.

De façon particulièrement avantageuse, le déplacement de la pièce de commande 9, lorsqu'il est possible, engendre le déplacement radial des bras entraîneurs 5 et des mâchoires 4 associées, par le biais de moyens d'actionnement, disposés, c'est-à-dire ménagés ou montés sur la pièce de commande 9, et destinés à coopérer avec des moyens de liaison correspondant solidarisés avec les bras entraîneurs 5.

Les moyens d'actionnement sont avantageusement agencés de telle sorte que la translation de la pièce de commande 9 selon une direction sensiblement perpendiculaire à la direction de déplacement des bras entraîneurs 5, entraîne le déplacement radial de ces derniers.

Les moyens d'actionnement sont avantageusement formés par deux rainures 20, préférentiellement ménagées sur toute l'épaisseur de la plaque formant la pièce de commande 9, et de préférence diamétralement opposées relativement à l'axe Z-Z'.

Les moyens de liaison sont avantageusement formés par deux ergots 21 disposés sur les bras entraîneurs 5 et préférentiellement à l'extrémité interne, située vers l'axe Z-Z', de ces derniers.

Bien évidemment, lorsque l'appareil comportera une unique mâchoire 4, les moyens d'actionnement seront de préférence formés par une seule rainure 20 destinée à coopérer avec un unique ergot 21 disposé sur l'unique bras entraîneur 5.

Lorsque l'organe de manipulation 8, notamment le bouton poussoir accessible manuellement par l'utilisateur, est actionné, en le tirant ou en le poussant, les ergots 21 coulissent à l'intérieur de la rainure 20 sous l'effet de la translation de la pièce de commande 9, ce qui a pour effet d'entraîner les bras entraîneurs 5 dans un mouvement radial. Le trajet des ergots 21 n'est ainsi pas libre au sein des rainures 20, mais soumis au déplacement de la pièce de commande 9.

Afin de rendre l'organe de manipulation 8 accessible à l'utilisateur, ce dernier est préférentiellement monté surélevé relativement à la pièce de commande 9, à l'aide par exemple d'un élément intercalaire 22 (figure 4).

De façon particulièrement avantageuse, les rainures 20 s'étendent longitudinalement selon une direction sensiblement oblique relativement à la direction radiale de déplacement des mâchoires 4 (figure 1).

Les extrémités des rainures 20 forment des butées à l'encontre des ergots 21 limitant ainsi leur course, ainsi que celle des bras entraîneurs 5 et des mâchoires 4 associées.

Chaque rainure 20 est avantageusement pourvue à ses extrémités de zones de dégagement 23, 24, chacune destinée à recevoir l'ergot 21 respectivement dans l'une ou l'autre des positions de verrouillage et de déverrouillage. La conception de ces appareils, et notamment la coopération directe entre la pièce de commande 9 et les ergots 21 d'une part, et la soupape de verrouillage 10 d'autre part, permet au système de résister à des efforts d'ouverture très importants lorsque l'appareil est sous pression.

Avantageusement, les bras entraîneurs sont ramenés en permanence en position de verrouillage par un moyen de rappel élastique constitué, par exemple, d'un ressort (non représenté aux figures) interposé entre deux jambages respectivement solidaires de chacun des bras entraîneurs.

Un tel montage est décrit en détails dans la demande WO-96/01069 et ne fera pas l'objet d'une description plus détaillée dans la suite.

L'organe de manipulation 8 associé à la pièce de commande 9 peut avantageusement assurer le déplacement radial des bras entraîneurs 5, de manière active dans le sens radial externe, c'est-à-dire dans un sens correspondant à l'écartement progressif des mâchoires 4 pour atteindre leur position extrême de déverrouillage, ou encore de manière active dans le sens radial interne, c'est-à-dire dans un sens de déplacement des mâchoires 4 en direction de leur position de verrouillage, et ce simplement en poussant ou en tirant sur l'organe de manipulation 8.

Il est également possible, tel que cela est décrit dans la demande WO-96/01069 d'utiliser deux organes de commande différents pour le verrouillage et le déverrouillage du couvercle.

Ainsi, l'organe de manipulation 8 pourra assurer, par exemple, uniquement le déplacement radial externe des bras entraîneurs 5, tandis qu'un bouton de commande 52, monté mobile axialement et élastiquement dans un pommeau 51 solidaire du couvercle 2, pourra commander le déplacement des bras entraîneurs 5 dans le sens radial interne, par enfoncement du bouton de commande 52 dans la direction axiale.

Le fonctionnement du bouton de commande 52 et des moyens associés est décrit en détails dans la demande WO-96/01069.

L'appareil de cuisson sous pression conforme à l'invention présente donc l'avantage de ne posséder qu'une seule position dans laquelle il peut monter en pression, cette position correspondant à la position de verrouillage extrême du couvercle sur la cuve.

Les modes de fonctionnement et d'utilisation de l'appareil domestique de cuisson d'aliments sous pression conforme à l'invention vont maintenant être décrits.

La mise en place du couvercle 2 sur la cuve 1 nécessite l'ouverture des mâchoires 4 et l'actionnement de l'organe de manipulation 8 (bouton poussoir) par enfoncement radial, ce qui permet de faire coulisser la pièce de commande 9 selon la flèche F2, entraînant ainsi les ergots 21 disposés à l'intérieur des rainures 20 dans une direction radiale centrifuge.

Le déplacement progressif de l'organe de manipulation 8 permet ainsi d'écarter progressivement et simultanément les bras entraîneurs 5 et les mâchoires 4 associées. Le déplacement est terminé lorsque chacun des ergots 21 est positionné dans les zones de dégagement 24 (figure 4). La position limite d'écartement des mâchoires 4 est ainsi déterminée par la mise en butée des ergots 21 contre l'une des extrémités des rainures 20. Dans la position extrême ainsi atteinte, le couvercle 2 peut être centré sur la cuve 1 (figure 1).

La fermeture de l'appareil, correspondant à l'atteinte par les mâchoires de leur position de verrouillage, peut être obtenue soit en tirant sur l'organe de manipulation 8, soit encore en exerçant une pression avec la main sur le bouton de commande 52 si l'appareil en est pourvu.

Quel que soit l'organe de commande utilisé, cette manipulation a pour effet de provoquer la translation de la pièce de commande 9 suivant la flèche F1, cette translation étant tout d'abord accompagnée par la sortie des ergots 21 hors des zones de dégagement 24, suivie de leur déplacement dans le sens radial centripète, rapprochant ainsi les mâchoires 4 l'une de l'autre jusqu'à ce qu'elles atteignent leur position de verrouillage (figure 4).

Le retour à la position de verrouillage peut également être assuré, au moins en partie, par le ressort de rappel disposé entre les deux bras entraîneurs 5.

En fin de fermeture, le dispositif de verrouillage / déverrouillage 3 émet avantageusement un déclic sonore informant l'utilisateur que l'appareil est bien verrouillé.

La position du bouton poussoir (formant l'organe de manipulation 8) qui fait saillie à l'extérieur du pommeau 51, renseigne également l'utilisateur sur le bon verrouillage de l'appareil.

Lorsque l'appareil est verrouillé de manière sensiblement étanche, la pression peut croître à l'intérieur de l'enceinte et provoquer le soulèvement de la soupape de verrouillage 10 vers sa position haute, à travers la lumière 14, et précisément à travers l'élargissement local 19.

L'engagement de la soupape de verrouillage 10 à travers l'élargissement local 19 permet ainsi de verrouiller simultanément en position d'une part la plaque ou pièce de commande 9, et d'autre part les bras entraîneurs 5 et les mâchoires 4 associées.

Le dispositif de verrouillage / déverrouillage 3 conformé à l'invention permet ainsi d'assurer une montée en pression en toute sécurité, puisque le passage de la soupape de verrouillage 10 dans la lumière 14 de verrouillage ne peut intervenir que si les bras entraîneurs 5, et donc les mâchoires 4, sont en position extrême de verrouillage.

L'utilisation d'une pièce de commande 9 unique, assurant à la fois la commande en déplacement des mâchoires 4 et le verrouillage, par coopération avec la soupape de verrouillage 10, permet d'une part d'éviter des jeux indésirables susceptibles de se former, notamment lorsqu'une pluralité de pièces coopèrent ensemble, et d'autre part de diminuer les risques de biais dans le guidage des mâchoires 4.

En outre, si pour une raison quelconque, l'appareil n'était pas correctement fermé, la pression relative à l'intérieur de l'enceinte ne pourrait pas dépasser une valeur pré-déterminée, par exemple de l'ordre de 4 KPa, puisque la lumière 14 et la soupape de verrouillage 10 sont conformées pour que cette dernière ne puisse pas venir en position haute d'étanchéité si le couvercle 2 n'est pas verrouillé correctement sur la cuve 1.

En particulier, dès lors que les mâchoires 4 sont dans une position déverrouillée ou dans une position intermédiaire entre la position verrouillée et la position déverrouillée, la soupape de verrouillage 10 se trouve nécessairement en regard du chemin de guidage 18, donc décalée par rapport à l'élargissement local 19, de telle sorte que sous l'effet de la pression régnant dans l'enceinte, la soupape 10 se soulève et ce, jusqu'à ce que le corps principal 15 vienne en butée contre la pièce de commande 9, autorisant ainsi une fuite au niveau du passage 30A.

Lorsque l'appareil est correctement fermé et verrouillé, son ouverture est impossible dès que la pression relative à l'intérieur de la cuve dépasse environ 1,5 KPa.

En fin de cuisson, l'utilisateur ne peut pas ouvrir l'appareil tant que la pression relative à l'intérieur de la cuve est supérieure à 0,5 KPa. Lorsque la pression relative à l'intérieur de l'appareil devient égale ou inférieure à 0,5 KPa, la soupape de verrouillage 10 revient en position basse, et autorise à nouveau l'ouverture du couvercle 2, par translation de la pièce de commande 9, le chemin de guidage 18 étant alors susceptible de coulisser autour du col 16 de la soupape 10.

L'utilisateur peut donc déplacer l'organe de manipulation 8 suivant le sens de la flèche F2, de manière à provoquer le déplacement radial rectiligne et centrifuge des mâchoires 4, permettant ainsi le retrait du couvercle 2.

Bien évidemment, les valeurs de pressions relatives mentionnées précédemment ne sont données qu'à titre illustratif, pour des besoins purement descriptifs.

## Revendications

1. Appareil domestique de cuisson d'aliments sous pression comportant une cuve (1) et un couvercle (2), ainsi qu'un dispositif de verrouillage / déverrouillage (3) du couvercle (2) sur la cuve (1), ledit dispositif comprenant :
- au moins une mâchoire (4), montée mobile radialement sur le couvercle (2) par l'intermédiaire d'un bras entraîneur (5) entre une position de verrouillage du couvercle (2) sur la cuve (1) et une position de déverrouillage dans laquelle le couvercle (2) peut être retiré de la cuve (1),
- des moyens de commande (7) du mouvement de ladite au moins une mâchoire (4), reliés au bras entraîneur (5) de façon à provoquer son déplacement radial et à déplacer la mâchoire (4) dans l'une ou l'autre des positions de verrouillage et de déverrouillage, lesdits moyens de commande (7) comprenant :
- un organe de manipulation (8), apte à être déplacé pour commander le déplacement de la mâchoire (4),
- une pièce de commande (9), montée mobile en translation sur le couvercle et entraînée en déplacement par l'organe de manipulation (8), ladite pièce de commande (9) coopérant avec le bras entraîneur (5) de telle manière que la translation de la pièce de commande (9) provoque un déplacement radial du bras entraîneur (5),
- au moins une soupape de verrouillage (10), montée sur le couvercle (2) et apte à occuper sous l'effet de la pression régnant dans l'appareil, une position haute d'étanchéité et une position basse de fuite,
**caractérisé en ce que** la pièce de commande (9) est pourvue d'une lumière (14) disposée relativement à la soupape de verrouillage (10) pour qu'en position de verrouillage de la mâchoire (4), la soupape de verrouillage (10) soit libre d'occuper sa position haute au sein de la lumière (14) et verrouille ainsi en position la pièce de commande (9).

2. Appareil selon la revendication 1 **caractérisé en ce que** la pièce de commande (9) est pourvue de moyens d'actionnement formés par au moins une rainure (20), destinée à coopérer avec au moins un ergot (21) disposé sur le bras entraîneur (5), et susceptible de coulisser à l'intérieur de la rainure (20) lors de la translation de la pièce de commande (9) pour entraîner le bras entraîneur (5) dans un mouvement radial.

3. Appareil selon la revendication 2 **caractérisé en ce que** la rainure (20) s'étend longitudinalement selon une direction sensiblement oblique relativement à la direction radiale de déplacement des mâchoires (4).

4. Appareil selon la revendication 2 ou 3 **caractérisé en ce que** la rainure (20) est pourvue à ses extrémités de zones de dégagement (23, 24), chacune destinée à recevoir l'ergot (21) respectivement dans l'une ou l'autre des positions de verrouillage et de déverrouillage.

5. Appareil selon l'une des revendications 1 à 4 **caractérisé en ce que** la lumière (14) et la soupape de verrouillage (10) sont conformées relativement l'une à l'autre de manière à interdire le passage en position haute de la soupape (10) lorsque la mâchoire (4) est soit déverrouillée, soit dans une position intermédiaire entre la position verrouillée et la position déverrouillée, empêchant ainsi la montée en pression de l'appareil si ce dernier n'est pas verrouillé.

6. Appareil selon l'une des revendications 1 à 5 **caractérisé en ce que** la soupape de verrouillage (10) comprend un corps principal (15), un col (16), et une tête (17), et **en ce que** la lumière (14) présente un chemin de guidage (18), de largeur sensiblement supérieure à celle du col (16) mais sensiblement inférieure à celle du corps principal (15), de telle manière que le chemin de guidage (18) d'une part autorise le déplacement de la pièce de commande (9) entre les positions de verrouillage et de déverrouillage lorsque la soupape de verrouillage (10) est en position basse, par coulissement dudit chemin de guidage (18) autour du col (16), et d'autre part interdise le passage en position haute de la soupape (10) dès lors que la mâchoire (4) est dans une position déverrouillée ou dans une position intermédiaire entre la position déverrouillée et la position verrouillée, ledit chemin de guidage (18) formant butée à l'encontre du corps principal (15) de la soupape.

7. Appareil selon la revendication 6 **caractérisé en ce que** le chemin de guidage (18) s'étend suivant la direction de déplacement de la pièce de commande (9), de manière à permettre la translation de cette dernière.

8. Appareil selon la revendication 6 ou 7 **caractérisé en ce que** la lumière (14) présente un élargissement local (19), disposé de telle sorte qu'en position de verrouillage, la soupape de verrouillage puisse venir occuper sa position haute au sein dudit élargissement (19), verrouillant ainsi la pièce de commande (9) en position.

9. Appareil selon l'une des revendications 1 à 8 **caractérisé en ce que** l'organe de manipulation (8) est formé par un bouton poussoir solidarisé avec la pièce de commande (9).

10. Appareil selon l'une des revendications 1 à 9 **caractérisé en ce que** le dispositif de verrouillage / déverrouillage (3) comprend deux mâchoires (4) opposées radialement reliées à deux bras entraîneurs (5) correspondants.

## Claims

1. Domestic appliance for cooking food under pressure, comprising a vessel (1) and a lid (2), as well as a device (3) for locking/unlocking the lid (2) on the vessel (1), the said device comprising:
- at least one jaw (4), mounted so as to be able to move radially on the lid (2) by means of a driving arm (5) between a position of locking the lid (2) on the vessel (1) and an unlocking position in which the lid (2) can be removed from the vessel (1),
- means of controlling (7) the movement of the said at least one jaw (4), connecting to the driving arm (5) so as to cause its radial movement and to move the jaw (4) into one or other of the locking and unlocking positions, the said means of controlling (7) comprising:
- a manipulation member (8) able to be moved to control the movement of the jaw (4),
- a control piece (9) mounted so as to be able to move in translation on the lid and driven in movement by the manipulation member (8), the said control piece (9) cooperating with the driving arm (5) so that the translation of the control piece (9) causes a radial movement of the driving arm (5),
- at least one locking valve (10) mounted on the lid (2) and able to occupy, under the effect of the pressure prevailing in the appliance, a high sealing position and a low leakage position,
**characterised in that** the control piece (9) is provided with an aperture (14) disposed in relation to the locking valve (10) so that, in a locking position of the jaw (4), the locking valve (10) is free to occupy its high position within the aperture (14) and thus locks the control piece (9) in position.

2. Appliance according to claim 1, **characterised in that** the control piece (9) is provided with actuation means formed by at least one groove (20), intended to cooperate with at least one lug (21) disposed on the driving arm (5) and able to slide inside the groove (20) when the control piece (9) is moved in translation in order to drive the driving arm (5) in a radial movement.

3. Appliance according to claim 2, **characterised in that** the groove (20) extends longitudinally in a substantially oblique direction relative to the radial direction of movement the jaws (4).

4. Appliance according to claim 2 or 3, **characterised in that** the groove (20) is provided at its ends with recessed areas (23, 24), each intended to receive the lug (21) respectively in one or other of the locking and unlocking positions.

5. Appliance according to one of claims 1 to 4, **characterised in that** the aperture (14) and the locking valve (10) are conformed relative to each other so as to prevent the valve (10) from passing to its high position when the jaw (4) is either unlocked or in an intermediate position between the locked position and the unlocked position, thus preventing the rise in pressure of the appliance if the latter is not locked.

6. Appliance according to one of claims 1 to 5, **characterised in that** the locking valve (10) comprises a main body (15), a neck (16) and a head (17), and **in that** the aperture (14) has a guide path (18) with a width substantially greater than that of the neck (16) but substantially less than that of the main body (15), so that the guide path (18) on the one hand allows the movement of the control piece (9) between the locking and unlocking positions when the locking valve (10) is in the low position, by sliding of the said guide path (18) around the neck (16), and on the other hand prevents the valve (10) from passing to the high position as soon as the jaw (4) is in an unlocked position or in an intermediate position between the unlocked position and the locked position, the said guide path (18) forming a stop against the main body (15) of the valve.

7. Appliance according to claim 6, **characterised in that** the guide path (18) extends in the direction of movement of the control piece (9) so as to allow the translation of the latter.

8. Appliance according to claim 6 or 7, **characterised in that** the aperture (14) has a local broadening (19) disposed so that, in the locking position, the locking valve can come to occupy its high position within the said broadening (19), thus locking the control piece (9) in position.

9. Appliance according to one of claims 1 to 8, **characterised in that** the manipulation member (8) is formed by a push button integral with the control piece (9).

10. Appliance according to one of claims 1 to 9, **characterised in that** the locking/unlocking device (3) comprises two radially opposed jaws (4) connected to two corresponding driving arms (5).

## Patentansprüche

1. Haushaltsgerät zum Garen von Nahrungsmitteln unter Druck, das einen Behälter (1) und einen Deckel (2) sowie eine Verriegelungs-/Entriegelungsvorrichtung (3) des Deckels (2) auf dem Behälter (1) aufweist, wobei die Vorrichtung Folgendes umfasst:
- mindestens eine Backe (4), die auf dem Deckel (2) über einen Mitführarm (5) zwischen einer Verriegelungsstellung des Deckels (2) auf dem Behälter (1) und einer Entriegelungsstellung radial beweglich angebracht ist, in welcher der Deckel (2) von dem Behälter (1) abgenommen werden kann,
- Mittel (7) zum Steuern der Bewegung der mindestens einen Backe (4), die mit dem Mitführarm (5) verbunden sind, um seine radiale Verschiebung zu bewirken und die Backe (4) in die Verriegelungs- oder Entriegelungsstellung zu verschieben, wobei die Steuermittel (7) Folgendes aufweisen:
- ein Betätigungsorgan (8), das verschoben werden kann, um die Verschiebung der Backe (4) zu steuern,
- einen Steuerteil (9), der in Translation beweglich auf dem Deckel angebracht ist und in Verschiebung von dem Betätigungsorgan (8) mitgenommen wird, wobei der Steuerteil (9) mit dem Mitführarm (5) so zusammenwirkt, dass die Translation des Steuerteils (9) eine radiale Verschiebung des Mitführarms (5) verursacht,
- mindestens ein Verriegelungsventil (10), das auf dem Deckel (2) angebracht ist und unter der Einwirkung des Drucks, der in dem Gerät herrscht, eine obere Dichtheitsstellung und eine untere Leckstellung einnehmen kann,
**dadurch gekennzeichnet, dass** der Steuerteil (9) mit einer Öffnung (14) versehen ist, die in Bezug auf das Verriegelungsventil (10) so angeordnet ist, dass das Verriegelungsventil (10) in der Verriegelungsstellung der Backe (4) seine obere Stellung innerhalb der Öffnung (14) einnehmen kann und so den Steuerteil (9) in Position verriegelt.

2. Gerät nach Anspruch 1, **dadurch gekennzeichnet, dass** der Steuerteil (9) mit Mitteln zum Betätigen versehen ist, die aus mindestens einer Nut (20) gebildet sind, die dazu bestimmt ist, mit mindestens einem Dorn (21), der auf dem Mitführarm (5) angeordnet ist und im Inneren der Nut (20) bei der Translation des Steuerteils (9) gleiten kann, zusammenzuwirken, um den Mitführarm (5) in einer radialen Bewegung mitzunehmen.

3. Gerät nach Anspruch 2, **dadurch gekennzeichnet, dass** sich die Nut (20) longitudinal entlang einer Richtung im Wesentlichen schräg zu der radialen Verschiebungsrichtung der Backen (4) erstreckt.

4. Gerät nach Anspruch 2 oder 3, **dadurch gekennzeichnet, dass** die Nut (20) an ihren Enden mit Austrittszonen (23, 24) versehen ist, die dazu bestimmt sind, den Dorn (21) jeweils in der Verriegelungs- oder Entriegelungsstellung aufzunehmen.

5. Gerät nach einem der Ansprüche 1 bis 4, **dadurch gekennzeichnet, dass** die Öffnung (14) und das Verriegelungsventil (10) zueinander so ausgebildet sind, dass sie den Übergang des Ventils (10) in obere Stellung unterbinden, wenn die Backe (4) entweder entriegelt oder in einer Zwischenstellung zwischen der verriegelten Stellung und der entriegelten Stellung ist, und so den Druckanstieg in dem Gerät verhindern, wenn Letzteres nicht verriegelt ist.

6. Gerät nach einem der Ansprüche 1 bis 5, **dadurch gekennzeichnet, dass** das Verriegelungsventil (10) einen Hauptkörper (15), einen Kragen (16) und einen Kopf (17) umfasst, und dass die Öffnung (14) einen Führungsweg (18) mit im Wesentlichen größerer Breite als die des Kragens (16) aufweist, aber im Wesentlichen kleiner als die des Hauptkörpers (15), so dass der Führungsweg (18) einerseits die Verschiebung des Steuerteils (9) zwischen der Verriegelungsstellung und der Entriegelungsstellung gestattet, wenn das Verriegelungsventil (10) in unterer Stellung ist, durch Gleiten des Führungswegs (18) um den Kragen (16), und andererseits den Übergang des Ventils (10) in obere Stellung unterbindet, sobald die Backe (4) in einer Entriegelungsstellung oder in einer Zwischenstellung zwischen der verriegelten und der entriegelten Stellung ist, wobei der Führungsweg (18) einen Anschlag gegen den Hauptkörper (15) des Ventils bildet.

7. Gerät nach Anspruch 6, **dadurch gekennzeichnet, dass** sich der Führungsweg (18) entlang der Verschiebungsrichtung des Steuerteils (9) erstreckt, um das Verschieben dieses Letzteren zu erlauben.

8. Gerät nach Anspruch 6 oder 7, **dadurch gekennzeichnet, dass** die Öffnung (14) eine lokale Erweiterung (19) aufweist, die so angeordnet ist, dass das Verriegelungsventil in der Verriegelungsstellung seine obere Stellung innerhalb der Erweiterung (19) einnehmen kann, wodurch der Steuerteil (9) in Position verriegelt wird.

9. Gerät nach einem der Ansprüche 1 bis 8, **dadurch gekennzeichnet, dass** das Betätigungsorgan (8) aus einem Druckknopf besteht, der fest mit dem Steuerteil (9) verbunden ist.

10. Gerät nach einem der Ansprüche 1 bis 9, **dadurch gekennzeichnet, dass** die Verriegelungs-/Entriegelungsvorrichtung (3) zwei Backen (4) aufweist, die einander radial entgegengesetzt und mit zwei entsprechenden Mitführarmen (5) verbunden sind.
